# EUROPÄISCHE PATENTSCHRIFT

(11) **EP 2 053 449 B1**
(45) Veröffentlichungstag und Bekanntmachung des Hinweises auf die Patenterteilung: **22.08.2012**
(21) Anmeldenummer: 08105492.6
(22) Anmeldetag: 06.10.2008
(51) Int. Cl.: H01Q 19/06, H01Q 1/32, G02C 11/08

(54) **Optische Vorrichtung**
Optical device
Dispositif optique

(30) Priorität: 25.10.2007 DE 102007050998
(43) Veröffentlichungstag der Anmeldung: 29.04.2009
(73) Patentinhaber: Robert Bosch GmbH, 70469 Stuttgart (DE)
(72) Erfinder: Garnier, Kai, 73779, Deizisau (DE)

(56) Entgegenhaltungen:
- EP-A- 0 615 144
- EP-A- 1 646 266
- WO-A-2004/070452
- DE-A1- 10 149 337
- US-A- 3 173 141
- US-A- 4 133 603

## Beschreibung

### Stand der Technik

Die Erfindung betrifft eine optische Vorrichtung gemäß dem Oberbegriff des Anspruchs 1. Weiterhin betrifft die Erfindung eine Verwendung der optischen Vorrichtung.

In nahezu allen optischen Vorrichtungen werden Linsenelemente eingesetzt. Insbesondere bei Änderungen der Umgebungsbedingungen, zum Beispiel einem plötzlichen Abkühlen oder Erwärmen sowie bei Änderungen der Luftfeuchtigkeit, kann es passieren, dass die Linsenelemente beschlagen. Bei niedrigen Temperaturen ist es auch möglich, dass sich eine Eisschicht auf den Linsenelementen bildet. Um dies zu vermeiden, werden so genannte Linsenheizungen eingesetzt. Bei diesen wird um einen Wickelkörper ein Widerstandsdraht gewickelt, der zum Beispiel über Kontaktniete und Kontaktfedern mit elektrischer Spannung versorgt wird. Der durch den Widerstandsdraht fließende Strom wird in Wärme umgewandelt. Auf diese Weise wird das Linsenelement von Eis bzw. Wasser befreit. Nachteil hierbei ist es jedoch, dass im Linsenelement mehrere Bauelemente enthalten sein müssen. Diese können einerseits den Strahlengang durch die Linse stören, andererseits ist es aufwendig, diese herzustellen. Zudem ist es notwendig, die bekannte Linsenheizung mit einer Elektronik zu kontaktieren. Auch ist zum Betrieb der Linsenheizung ein zusätzlicher Energiebedarf notwendig. Eine beheizte Linse eines Radarsystems für Kraftfahrzeuge ist bekannt aus der EP 1 646 266 A2. Weiterhin ist aus der US 3,173,141 ein mit Infrarotstrahlung beheiztes Radom bekannt

### Offenbarung der Erfindung

Vorteile der Erfindung

Eine erfindungsgemäße optische Vorrichtung umfasst ein Gerät mit den Merkmalen von Anspruch 1, darunter mindestens ein Linsenelement, das beheizbar ist. Hierzu enthält zumindest ein Teil des Linsenelementes mindestens einen Füllstoff, durch den elektromagnetische Strahlung in Wärme umgewandelt wird.

Vorteil hiervon ist es, dass eine zusätzliche Ankontaktierung des Linsenelementes nicht erforderlich ist. Auch wird keine zusätzliche Spannungsversorgung benötigt. Ein weiterer Vorteil der erfindungsgemäßen Vorrichtung ist es, dass im Linsenelement kein zusätzliches Einlegeteil enthalten ist, das den Strahlengang stören kann.

Einsatz findet die erfindungsgemäße optische Vorrichtung bei Abstandssensoren in Kraftfahrzeugen, bei denen mittels Radar der Abstand zum Beispiel zu einem vorausfahrenden Fahrzeug ermittelt wird. Weiterhin ist es auch möglich, dass die erfindungsgemäße optische Vorrichtung im Luftverkehr eingesetzt wird, zum Beispiel für die Kollisionswarnung bei Flugzeugen. Auch bei allen weiteren Radaranwendungen ist die erfindungsgemäße optische Vorrichtung verwendbar.

Unter einem Linsenelement wird gemäß der Erfindung eine Linse oder ein gekrümmter Spiegel, beispielsweise ein Hohlspiegel, verstanden.

Das Linsenelement ist aus einem Material gefertigt, das für elektromagnetische Strahlung transparent ist. Hierzu eignet sich jeder dem Fachmann bekannte Werkstoff, der für elektromagnetische Strahlung transparent ist. Geeignete Werkstoffe sind zum Beispiel Kunststoffe oder Glas. Als Kunststoff eignen sich beispielsweise Polycarbonat, Polyetherimid oder Polymethylmethacrylat.

Der mindestens eine Füllstoff ist vorzugsweise in Form von Partikeln, insbesondere Nanopartikeln, im Linsenelement enthalten. Hierdurch wird vermieden, dass durch den Füllstoff der Strahlengang durch das Linsenelement beeinträchtigt wird. Als Füllstoff eignen sich alle Materialien, die elektromagnetische Strahlung absorbieren. Dies sind üblicherweise polare Moleküle. Geeignete Materialien für den Füllstoff sind zum Beispiel Ferrite, dotiertes Silizium, Metalloxide, Kohlenwasserstoff-Moleküle oder Wasser. Auch alle anderen Materialien, die elektromagnetische Strahlung absorbieren, sind als Füllstoff geeignet. Hierbei ist lediglich darauf zu achten, dass der Füllstoff das Material des Linsenelementes nicht schädigt.

Wenn der Füllstoff als Nanopartikel vorliegt, weisen diese vorzugsweise einen mittleren Partikeldurchmesser von maximal 900 nm auf. Besonders bevorzugt weisen die Nanopartikel einen einen mittleren Partikeldurchmesser von maximal 800 auf.

Alternativ ist es auch möglich, dass die Nanopartikel in Form von Agglomeraten vorliegen.

Um eine gleichmäßige Erwärmung des Linsenelementes zu erzielen, sind die Nanopartikel vorzugsweise homogen verteilt im Linsenelement angeordnet. Zudem führt dies dazu, dass die Nanopartiel den Strahlengang in der Linse nicht beeinträchtigen.

Um eine ausreichende Erwärmung des Linsenelementes zu erzielen, damit das Überfrieren oder Beschlagen des Linsenelmentes verhindert wird, liegt der Anteil der im Linsenelement verteilt angeordneten Nanopartikel vorzugsweise im Bereich von 0,001 bis 70 Gew.-%, bevorzugt im Bereich von 0,1 bis 10 Gew.-%, bezogen auf die Masse des Linsenelementes. Die Verteilung der Nanopartikel kann homogen sein oder mit zunehmendem Anteil an Nanopartikeln hin zur Oberfläche des Linsenelements.

In der erfindungsgemäßen Ausführungsform ist das Linsenelement zweiteilig ausgebildet. Hierbei umfasst das Linsenelement ein Einlegeteil, das für die elektromagnetische Strahlung durchlässig ist. Erfindungsgemäß ist das Einlegeteil von einer Umspritzung umschlossen, die den mindestens einen Füllstoff enthält, der die elektromagnetische Strahlung in Wärme umwandelt. Dadurch, dass das Einlegeteil von der den Füllstoff enthaltenden Umspritzung umschlossen ist, wird das Linsenelement insbesondere an seiner Oberfläche erwärmt. Gegenüber der aus dem Stand der Technik bekannten Linsenheizung hat dies den Vorteil, dass die Wärme dort entsteht, wo sie benötigt wird, um ein Beschlagen oder Überfrieren des Linsenelementes zu verhindern.

Ein weiterer Vorteil der zweiteiligen Gestaltung des Linsenelementes, bei der die Umspritzung den Füllstoff enthält, ist, dass hierdurch gleichzeitig die Funktion der Abschirmung eines Gehäuses mit übernommen werden kann.

Alternativ ist es selbstverständlich auch möglich, dass das zweiteilige Linsenelement ein Einlegeteil umfasst, welches den Füllstoff enthält und das von einer Umspritzung umschlossen ist, die frei von Füllstoff ist. In diesem Fall wird das Einlegeteil aufgeheizt und muss die Wärme durch die Umspritzung an die Linsenoberfläche abgeben. Das Verhalten der Linsenheizung entspricht dabei dem, wie es für aus dem Stand der Technik bekannte Linsenheizungen bekannt ist.

Die elektromagnetische Strahlung, die von den Partikeln absorbiert und in Wärme umgewandelt wird, ist vorzugsweise Radarstrahlung. Hierbei eignet sich, abhängig vom Material der Partikel, jede Art der Radarstrahlung. Das Partikelmaterial wird ausgewählt anhand der zu erwartenden oder eingesetzten Strahlung. In einer besonders bevorzugten Ausführungsform umasst die optische Vorrichtung einen Sender, der die Radarstrahlung emittiert. Das bedeutet, dass die Radarstrahlung, die von den Partikeln absorbiert und in Wärme umgewandelt wird, von der Vorrichtung selbst abgestrahlt wird. Im Allgemeinen wird die Radarstrahlung abgestrahlt, reflektiert und die zurückfallende Radarstrahlung fällt auf das Linsenelement. Hierbei wird die zurückfallende Radarstrahlung von den Partikeln absorbiert und regt diese zu Schwingungen an. Durch die Schwingungen wird Wärme erzeugt.

Die erfindungsgemäße optische Vorrichtung findet zum Beispiel Einsatz in einem Abstand-Regelungs-Radar, wie er in Kraftfahrzeugen oder in Luftfahrzeugen eingesetzt werden kann. In Luftfahrzeugen handelt es sich hierbei um insbesondere um einen Radar zur Kollisionswarnung.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: ein Linsenelement mit Linsenheizung gemäß dem Stand der Technik,
- Figur 2: ein erfindungsgemäß ausgebildetes Linsenelement,
- Figur 3: ein erfindungsgemäß ausgebildetes zweiteiliges Linsenelement mit Strahlenquelle,
- Figur 4: ein erfindungsgemäß ausgebildetes Linsenelement als Gehäuseabschluss.

### Ausführungsformen der Erfindung

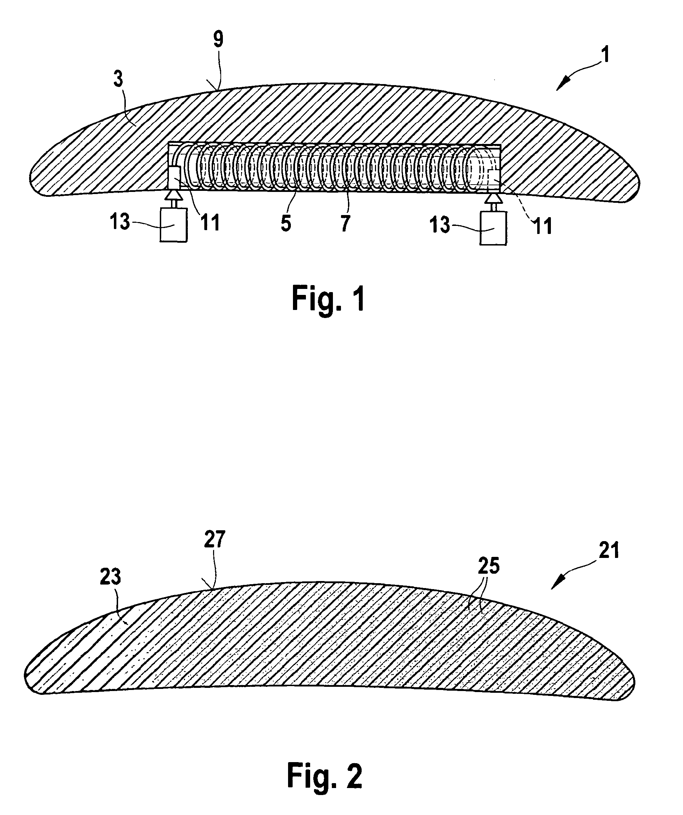

In Figur 1 ist ein Linsenelement mit einer Linsenheizung gemäß dem Stand der Technik dargestellt.

Ein Linsenelement 1 umfasst einen Linsenkörper 3 aus einem für elektromagnetische Strahlung durchlässigen Material. Der Linsenkörper 3 umschließt einen Wickelkörper 5 aus einem elektrisch nicht leitenden Material, um den ein Widerstandsdraht 7 gewickelt ist. Um das Linsenelement 1 zu beheizen und dadurch ein Beschlagen oder Vereisen der Oberfläche 9 des Linsenelementes 1 zu verhindern wird der Widerstandsdraht 7 mit elektrischem Strom versorgt. Durch das Anlegen des elektrischen Stromes an den Widerstandsdraht 7 heizt sich dieser auf. Die dabei entstehende Wärme wird über den Linsenkörper 3 an die Oberfläche 9 abgegeben. Der Wärmetransport erfolgt dabei durch Wärmeleitung und durch Strahlung.

Um den Widerstandsdraht 7 mit elektrischem Strom versorgen zu können, ist dieser im Allgemeinen an seinen Enden jeweils mit einer Kontaktniete 11 verbunden. Die Kontaktnieten 11 durchdringen den Linsenkörper 3, so dass eine elektrisch leitfähige Oberfläche der Kontaktniete 11 von außen mit einem elektrischen Leiter kontaktiert werden kann. Im Allgemeinen erfolgt der elektrische Kontakt mit der Kontaktniete 11 über eine Kontaktfeder 13, die gegen die Kontaktniete 11 gepresst wird. Alternativ ist jedoch auch jede andere, dem Fachmann bekannte Kontaktierungsart einsetzbar. So ist es zum Beispiel auch möglich, stromleitende Drähte an die Kontaktnieten 11 anzulöten.

Nachteil der aus dem Stand der Technik bekannten Linsenheizung, wie sie in Figur 1 dargestellt ist, ist, dass im Linsenkörper 3 ein Einlegeteil, den Wickelkörper 5 mit Widerstandsdraht 7 umfassend, aufgenommen ist. So ist es zunächst erforderlich, den Wickelkörper 5 herzustellen, der anschließend mit dem Widerstandsdraht 7 umwickelt wird. Dieser wird dann in einem weiteren Schritt mit dem Linsenkörper 3 umhüllt. Hierbei ist es einerseits möglich, dass bei einer Herstellung des Linsenkörpers 3 durch einen Spritzgussprozess, zum Beispiel wenn dieser aus einem Kunststoffmaterial gefertigt wird, vor Beginn des Spritzgussprozesses das Einlegeteil in das Werkzeug eingelegt wird. In diesem Fall wird der Wickelkörper 5 mit dem Widerstandsdraht 7 vom Linsenkörper 3 umspritzt. Alternativ ist es auch möglich, in einem Linsenkörper 3 eine Vertiefung auszubilden, in welche der Wickelkörper 5 mit dem Widerstandsdraht 7 eingelegt wird. Anschließend kann die Vertiefung zum Beispiel mit einem fließfähigen Polymerharz verschlossen werden.

In Figur 2 ist ein weiteres Beispiel eines Linsenelementes schematisch dargestellt.

Das Linsenelement 21 umfasst einen Linsenkörper 23 aus einem für elektromagnetische Strahlung durchlässigen Material. Geeignete Materialien für den Linsenkörper 23 sind zum Beispiel Kunststoffe wie Polycarbonat, Polyetherimid oder Polymethylmethacrylat. Weiterhin eignet sich als Material für den Linsenkörper 23 auch Glas. Weiterhin sind auch alle anderen Materialien geeignet, die für elektromagnetische Strahlung durchlässig sind, die mit dem Linsenelement 21 gebündelt oder gestreut werden soll.

Zur Herstellung des Linsenkörpers 23 wird üblicherweise zunächst ein Rohling produziert. Die Rohlinge können zum Beispiel durch ein Spritzgussverfahren hergestellt werden. Auch ist es möglich, zum Beispiel eine Stange aus dem Material für den Linsenkörper herzustellen und diese in Scheiben zu sägen. Anschließend werden die Scheiben oder spritzgegossenen Rohlinge in die richtige Form geschliffen. Weiterhin ist es jedoch auch möglich, den Linsenkörper 23 direkt in die richtige Form zum Beispiel durch Spritzgussverfahren zu spritzen.

Im Linsenkörper 23 ist ein Füllstoff 25 enthalten. Der Füllstoff 25 liegt vorzugsweise in Form von Partikeln, insbesondere in Form von Nanopartikeln vor. Bevorzugt liegt der mittlere Partikeldurchmesser der Nanopartikel im Bereich von 0,1 bis 900 nm, mehr bevorzugt im Bereich von 0,5 bis 500 nm, insbesondere im Bereich von 1 bis 100 nm. Aufgrund ihrer geringen Größe führen die im Linsenkörper 23 enthaltenen Partikel nicht zu einer Störung des Strahlenganges und damit zu einer Fehlfunktion des Linsenelementes 21.

Der in Form von Partikeln vorliegende Füllstoff 25 ist vorzugsweise gleichmäßig im Linsenkörper 23 verteilt. Durch die gleichmäßige Verteilung wird eine gleichmäßige Absorption durch den Füllstoff 25 erzielt und damit eine gleichmäßige Erwärmung des Linsenkörpers 23. Um den Linsenkörper 23 an seiner Oberfläche 27 stärker zu erwärmen, ist es jedoch auch möglich, den Füllstoff 25 so anzuordnen, dass an der Oberfläche 27 des Linsenkörpers 23 eine größere Menge an Füllstoff 25 enthalten ist und im Kern eine kleinere Menge Füllstoff 25. Die Menge des im Linsenkörper enthaltenen Füllstoffes 25 liegt vorzugsweise im Bereich von 0,001 bis 70 Gew.-%. Besonders bevorzugt liegt der Anteil an Füllstoff 25 im Linsenkörper 23 im Bereich von 0,1 bis 10 Gew.-%. Der Anteil bezieht sich dabei auf die Masse des Linsenkörpers 23.

Als Material für den Füllstoff eignen sich zum Beispiel Ferrite, dotiertes Silizium, Metalloxide, zum Beispiel Aluminiumoxid, Germaniumoxid, Indiumoxid, Galliumoxid, Thoriumoxid, Strontiumoxid, Bismutoxid, Arsenoxid, Kohlenwasserstoffe, insbesondere Kohlenwasserstoffe, die Fluor, Schwefel oder Sauerstoff enthalten und als Flüssigkeit vorliegen, Phosphoroxid, Boroxid, Silizumoxid oder Wasser. Insbesondere sind als Füllstoff Werkstoffe geeignet, die polare Moleküle enthalten. Neben den vorstehend genannten Materialien für den Füllstoff eignen sich jedoch auch alle anderen Materialien, die in Form von Nanopartikeln in den Linsenkörper 23 eingebracht werden können und die elektromagnetische Strahlung absorbieren und in Wärme umwandeln.

Um den Füllstoff 25 gleichmäßig verteilt im Linsenkörper 23 einzubringen, wird dieser vorzugsweise bereits bei der Herstellung der Rohlinge dem Material für den Linsenkörper 23 beigemischt. Wenn der Linsenkörper 23 aus einem Kunststoffmaterial gefertigt wird, ist es bevorzugt, wenn der Füllstoff bereits dem Ausgangsmaterial für die Herstellung der Rohlinge oder der Linsenkörper beigemischt ist. Das heißt, dass der Füllstoff bereits bei der Rohstoffherstellung, im Allgemeinen der Granulatherstellung, beigemischt wird. Bei der Herstellung von Linsenelementen aus Glas wird der Füllstoff im Allgemeinen der Glasschmelze zugemischt.

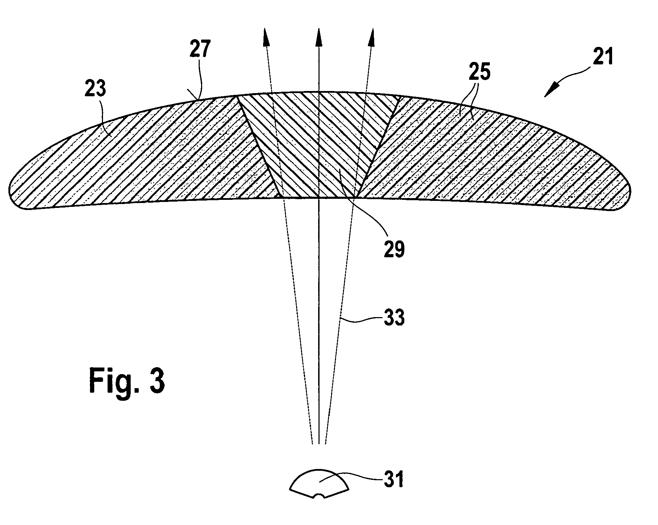

In Figur 3 ist schematisch ein erfindungsgemäß zweiteilig ausgebildetes Linsenelement mit Strahlenquelle dargestellt.

Im Unterschied zu dem in Figur 2 dargestellten erfindungsgemäße Linsenelement 21 ist das in Figur 3 dargestellte Linsenelement 21 zweiteilig ausgeführt. Das zweiteilig ausgebildete Linsenelement 21 umfasst ein Einlegeteil 29, das vom Linsenkörper 23 umschlossen ist. Das Einlegeteil 29 kann aus dem gleichen Material gefertigt sein wie der Linsenkörper 23. Um einen verbesserten Strahlendurchgang zu erzielen ist es zum Beispiel möglich, dass das Einlegeteil 29 einen geringeren Anteil an Füllstoff enthält als der Linsenkörper 23. Weiterhin ist es auch möglich, dass das Einlegeteil 29 zum Beispiel vollständig ungefüllt ist. Weiterhin ist es selbstverständlich auch möglich, dass das Einlegeteil 29 einen größeren Anteil an Füllstoff 25 enthält.

Neben der Ausführungsform, bei der das Einlegeteil 29 und der Linsenkörper 23 aus dem gleichen Material mit einem unterschiedlichen Anteil an Füllstoff 25 gebildet sind ist es auch möglich, dass das Einlegeteil 29 und der Linsenkörper 23 aus unterschiedlichen Materialien gefertigt sind. Bevorzugt ist es hierbei auch, dass sowohl das Einlegeteil 29 als auch der Linsenkörper 23 für die elektromagnetische Strahlung durchlässig sind.

Wenn das erfindungsgemäße Linsenelement 21 in einem Abstand-Regelungs-Radar für Kraftfahrzeuge oder einem Kollisionswarnungs-Radar für Luftfahrzeuge eingesetzt wird, ist das Linsenelement 21 Teil einer optischen Vorrichtung, die weiterhin eine Strahlenquelle 31 umfasst. Die Strahlenquelle 31 ist im Allgemeinen ein Sender, der elektromagnetische Strahlung 33 emittiert.

Beim Einsatz der optischen Vorrichtung als Abstands-Regelungs-Radar in Kraftfahrzeugen oder als Kollisionswarnungs-Radar in Luftfahrzeugen ist es möglich, dass die Strahlenquelle 31 gleichzeitig auch als Empfänger eingesetzt wird, der zum Beispiel von einem vorausfahrenden Kraftfahrzeug oder einem Hindernis reflektierte elektromagnetische Strahlung 33 empfängt. Alternativ ist es selbstverständlich auch möglich, dass die Strahlenquelle 31 und der Empfänger für die reflektierte elektromagnetische Strahlung 33 zwei unterschiedliche Bauteile sind.

Das zweiteilig ausgeführte Linsenelement 21, wie es in Figur 3 dargestellt ist, wird bevorzugt dann eingesetzt, wenn sich zeigt, dass der Anteil der Füllstoffe 25 im Linsenkörper 23 so groß ist, dass der durch das Linsenelement 21 hindurchgehende Anteil an elektromagnetischer Strahlung 33 zu klein ist, um eine fehlerfreie Funktion zum Beispiel des Abstands-Regelungs-Radars oder des Kollisionswarnungs-Radars zu gewährleisten.

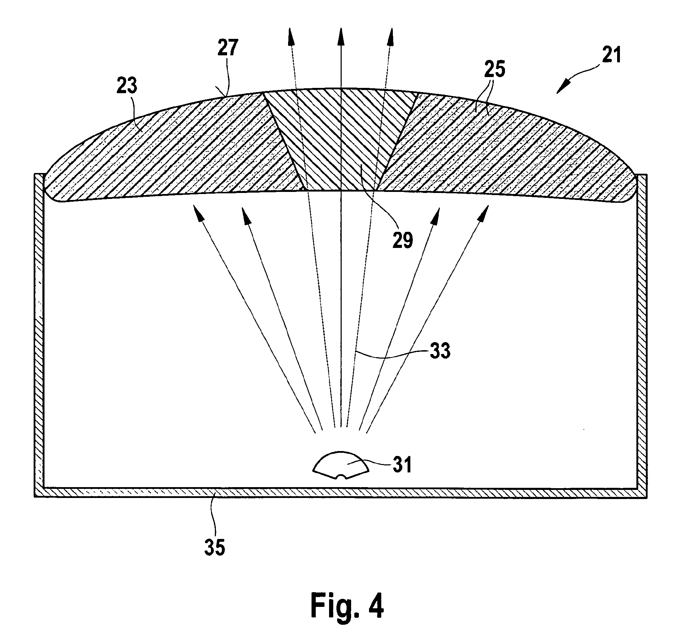

In Figur 4 ist ein erfindungsgemäß ausgebildetes Linsenelement dargestellt, das als Gehäuseabschluss ausgebildet ist.

Üblicherweise ist die Strahlenquelle 31 in einem Gehäuse 35 aufgenommen. Das Gehäuse wird mit einem Deckel verschlossen, in dem eine Ausnehmung ausgebildet ist, in die das Linsenelement 21 eingesetzt ist. Das Gehäuse 25 wird verwendet, damit keine Strahlung in unerwünschte Richtungen von der Strahlenquelle 31 abgestrahlt wird. Aus diesem Grund ist das Gehäuse 35 üblicherweise aus einem für die elektromagnetische Strahlung 33 undurchlässigen Material gefertigt.

Bei der in Figur 4 dargestellten Ausführungsform dient das Linsenelement 21 als Deckel des Gehäuses 35. Ein getrennter Deckel, in den eine Linsenhalterung eingesetzt ist, lässt sich hierdurch einsparen. Das Linsenelement 21 übernimmt somit gleichzeitig auch die Abschirmfunktion des Gehäuses 35 auf der Seite, auf der das Linsenelement 21 angebracht ist.

Das Linsenelement 21 ist in der in Figur 4 dargestellten Ausführungsform ebenfalls zweiteilig mit Einlegeteil 29 und Linsenkörper 23, der das Einlegeteil 29 umschließt, ausgebildet. Das Einlegeteil 29 ist in der hier dargestellten Ausführungsform ungefüllt. Alternativ ist es jedoch auch möglich, dass das Einlegeteil 29 mit dem Füllstoff 25 befüllt ist, wobei der Anteil an Füllstoff 25 im Einlegeteil 29 anders ist als im das Einlegeteil 29 umgebenden Linsenkörper 23. Bevorzugt ist der Anteil an Füllstoff 25 im Einlegeteil 29 kleiner als der Anteil an Füllstoff 25 im das Einlegeteil 29 umgebenden Linsenkörper 23. Alternativ ist es selbstverständlich auch möglich, dass der Linsenkörper 23 und das Einlegeteil 29 aus unterschiedlichen Materialien gefertigt sind.

Neben der in Figur 4 dargestellten Ausführungsform mit dem zweiteilig ausgebildeten Linsenelement 21 mit Einlegeteil 29 und das Einlegeteil 29 umgebenden Linsenkörper 23 ist es selbstverständlich auch möglich, das Linsenelement 21 einteilig auszuführen, wie dies in Figur 2 dargestellt ist. Hierbei ist das gesamte Volumen des Linsenkörpers 23 vorzugsweise homogen mit dem Füllstoff 25 befüllt, wodurch eine vollflächige Beheizung des Linsenelementes 21 möglich ist.

Weiterhin ist es auch möglich, dass das Linsenelement 21 inhomogen gefüllt ist. Dies ist sowohl bei dem zweiteilig ausgeführten Linsenelement 21, wie dies in den Figuren 3 und 4 dargestellt ist als auch bei dem einteilig ausgeführten Linsenelement 21 gemäß der Ausführungsform in Figur 2 möglich. Bei der zweiteiligen Ausführungsform ist es möglich, dass sowohl das Einlegeteil 29 inhomogen gefüllt ist als auch der das Einlegeteil 29 umgebende Linsenkörper 23. Bei der inhomogenen Füllung des Linsenkörpers 23 und gegebenenfalls des Einlegeteils 29 entsteht einerseits ein durchlässigerer Bereich für die elektromagnetische Strahlung 33 als auch ein weniger durchlässiger Bereich. Der durchlässigere Bereich wird von den benachbarten Bereichen durch Wärmeleitung miterwärmt. Die stärker gefüllten Bereiche des Linsenkörpers 23 und gegebenenfalls des Einlegeteils 29 können Füllstoff 25 bis zu einem Grad enthalten, an dem keine Strahlung mehr durch das Linsenelement 21 hindurchtritt. Auf diese Weise kann eine getrennte Abschirmung um das Linsenelement 21 herum entfallen. Die Strahlung kann über den Bereich des Linsenelementes 21 mit dem geringeren Füllgrad selektiv aus dem Gehäuse 35 austreten.

Neben der vollständigen Füllung des Linsenkörpers 23 mit dem Füllstoff 25 ist es auch möglich, auf eine Linse eine Beschichtung aufzubringen, die den Füllstoff 25 enthält. Auch in diesem Fall ist es möglich, in der Beschichtung den Füllstoff 25 inhomogen zu verteilen, um die Eigenschaften des Strahlengangs zu beeinflussen.

Das Linsenelement kann in allen Bereichen eingesetzt werden, in denen eine Beheizung des Linsenelementes 21 gewünscht ist. Geeignete Anwendungsbereiche sind zum Beispiel die Luftfahrtindustrie und das Transportwesen, sowohl bei Straßen-, Wasser-, Gelände- und Schienenfahrzeugen, zum Beispiel beim Einsatz als Abstands-Regelungs-Radar oder Kollisionswarnungs-Radar, als auch Freizeitartikel, zum Beispiel als Gläser in Sonnenbrillen oder Gletscherbrillen für den Wintersport.

## Patentansprüche

1. Optische Vorrichtung für ein Abstandsregelungsradar in Kraftfahrzeugen oder für ein Kollisions warnungsradar in Luftfahrzeugen umfassend mindestens ein Linsenelement (21), das beheizbar ist,
**dadurch gekennzeichnet, dass** die optische Vorrichtung des Weiteren eine Radar Strahlenquelle (31) umfasst und zumindest ein Teil des Linsenelements (21) mindestens einen Füllstoff (25) enthält, durch welchen elektromagnetische Strahlung (33) der Radar Strahlenquelle (31) in Wärme umgewandelt wird und das Linsenelement (21) zweiteilig ausgebildet ist, wobei das Linsenelement (21) ein Einlegeteil (29) umfasst, welches für die elektromagnetische Strahlung (33) der Radars Strahlenquelle (31) durchlässig ist und das von einer Umspritzung umschlossen ist, die den mindestens einen Füllstoff (25) enthält, der die elektromagnetische Strahlung (33) der Strahlenquelle (31) absorbiert und in Wärme umwandelt, so dass die optische Vorrichtung frei von Eis und Beschlag gehalten wird.

2. Optische Vorrichtung gemäß Anspruch 1, **dadurch gekennzeichnet, dass** das Linsenelement (21) aus einem Kunststoffmaterial oder aus Glas gefertigt ist.

3. Optische Vorrichtung gemäß Anspruch 2, **dadurch gekennzeichnet, dass** das Kunststoffmaterial ausgewählt ist aus Polycarbonat, Polyetherimid, Polymethylmethacrylat.

4. Optische Vorrichtung gemäß einem der Ansprüche 1 bis 3, **dadurch gekennzeichnet, dass** der mindestens eine Füllstoff (25) in Form von Nanopartikeln in dem Linsenelement (21) enthalten ist.

5. Optische Vorrichtung gemäß Anspruch 4, **dadurch gekennzeichnet, dass** die Nanopartikel einen mittleren Partikeldurchmesser von maximal 900 nm aufweisen.

6. Optische Vorrichtung gemäß Anspruch 4 oder 5, **dadurch gekennzeichnet, dass** die Nanopartikel homogen im Linsenelement (21) verteilt angeordnet sind.

7. Optische Vorrichtung gemäß Anspruch 6, **dadurch gekennzeichnet, dass** der Anteil der homogen im Linsenelement (21) verteilt angeordneten Nanopartikel im Bereich zwischen 0,001 bis 70 Gew.-% bezogen auf die Masse des Linsenelementes (21) liegt.

8. Optische Vorrichtung gemäß einem der Ansprüche 4 bis 7, **dadurch gekennzeichnet, dass** die Nanopartikel im wesentlichen aus einem Material bestehen, das ausgewählt ist aus Ferriten, dotiertem Silizium, Metalloxiden, Kohlenwasserstoffen, Wasser.

9. Verwendung der optischen Vorrichtung gemäß einem der Ansprüche 1 bis 10 in einem Abstands-Regelungs-Radar für Kraftfahrzeuge oder einem Kollisionswanungs-Radar für Luftfahrzeuge.

## Claims

1. Optical device for a distance-regulating radar in motor vehicles or for a collision-warning radar in aircraft, comprising at least one heatable lens element (21), **characterized in that** the optical device furthermore comprises a radar-radiation source (31) and at least part of the lens element (21) contains at least one filler (25) by means of which electromagnetic radiation (33) from the radar-radiation source (31) is converted into heat and the lens element (21) has a two-part design, the lens element (21) comprising an insert part (29) which is permeable to the electromagnetic radiation (33) of the radar radiation source (31) and which is surrounded by an extrusion coating which contains the at least one filler (25) which absorbs the electromagnetic radiation (33) of the radar-radiation source (31) and converts it into heat such that the optical device is kept free from ice and condensation.

2. Optical device according to Claim 1, **characterized in that** the lens element (21) is made of a polymer material or of glass.

3. Optical device according to Claim 2, **characterized in that** the polymer material is selected from polycarbonate, polyetherimide, polymethyl methacrylate.

4. Optical device according to one of Claims 1 to 3, **characterized in that** the at least one filler (25) is contained in the lens element (21) in the form of nanoparticles.

5. Optical device according to Claim 4, **characterized in that** the nanoparticles have a mean particle diameter of at most 900 nm.

6. Optical device according to either Claim 4 or 5, **characterized in that** the nanoparticles are arranged in the lens element (21) with a homogeneous distribution.

7. Optical device according to Claim 6, **characterized in that** the proportion of the nanoparticles arranged with a homogeneous distribution in the lens element (21) lies in the range between 0.001 and 70% by weight in respect of the mass of the lens element (21).

8. Optical device according to one of Claims 4 to 7, **characterized in that** the nanoparticles substantially consist of a material selected from ferrites, doped silicon, metal oxides, hydrocarbons, water.

9. Use of the optical device according to one of Claims 1 to 8 in a distance-regulating radar for motor vehicles or in a collision-warning radar for aircraft.

## Revendications

1. Dispositif optique pour radar de régulation de distance de véhicules automobiles ou pour radar d'avertissement de collision pour aéronefs, le dispositif comprenant au moins un élément de lentille (21) qui peut être chauffé,
**caractérisé en ce que**
le dispositif optique comporte en outre une source (31) de rayonnement radar et **en ce qu'**au moins une partie de l'élément de lentille (21) contient au moins une charge (25) par laquelle le rayonnement électromagnétique (33) de la source (31) de rayonnement radar est converti en chaleur, l'élément de lentille (21) étant réalisé en deux parties,
l'élément de lentille (21) comportant une partie d'insertion (29) transparente au rayonnement électromagnétique (33) de la source (31) de rayonnement radar et englobée dans une encapsulation qui contient la ou les charges (25) qui absorbent le rayonnement électromagnétique (33) de la source (31) de rayonnement radar et la convertissent en chaleur, de telle sorte que le dispositif optique soit maintenu exempt de glace et de précipitations.

2. Dispositif optique selon la revendication 1, **caractérisé en ce que** l'élément de lentille (21) est réalisé en une matière synthétique ou en verre.

3. Dispositif optique selon la revendication 2, **caractérisé en ce que** la matière synthétique est sélectionnée parmi le polycarbonate, les polyétherimides et le poly(méthacrylate de méthyle).

4. Dispositif optique selon l'une des revendications 1 à 3, **caractérisé en ce que** l'élément de lentille (21) contient la ou les charges (25) sous forme de nanoparticules.

5. Dispositif optique selon la revendication 4, **caractérisé en ce que** les nanoparticules ont un diamètre moyen d'au plus 900 nm.

6. Dispositif optique selon les revendications 4 ou 5, **caractérisé en ce que** les nanoparticules sont réparties de manière homogène dans l'élément de lentille (21).

7. Dispositif optique selon la revendication 6, **caractérisé en ce que** la teneur en nanoparticules réparties de manière homogène dans l'élément de lentille (21) est de l'ordre de 0,001 à 70 % en poids par rapport à la masse de l'élément de lentille (21).

8. Dispositif optique selon l'une des revendications 4 à 7, **caractérisé en ce que** les nanoparticules sont constituées essentiellement d'un matériau sélectionné parmi les ferrites, le silicium dopé, les oxydes métalliques, les hydrocarbures et l'eau.

9. Utilisation du dispositif optique selon l'une des revendications 1 à 8 dans un radar de régulation de distance pour véhicules automobiles ou un radar d'avertissement de collision pour aéronefs.
